# EUROPÄISCHE PATENTSCHRIFT

(11) **EP 2 321 082 B1**
(45) Veröffentlichungstag und Bekanntmachung des Hinweises auf die Patenterteilung: **04.11.2015**
(21) Anmeldenummer: 09778295.7
(22) Anmeldetag: 03.09.2009
(51) Int. Cl.: B23G 3/00

(54) **VORRICHTUNG ZUR ERZEUGUNG EINES GEWINDES**
DEVICE FOR PRODUCING A THREAD
DISPOSITIF DE PRODUCTION D'UN FILETAGE

(30) Priorität: 12.09.2008 DE 102008047073
(43) Veröffentlichungstag der Anmeldung: 18.05.2011
(73) Patentinhaber: Steinel Normalien AG, 78056 Villingen-Schwenningen (DE); Schröder, Stefan, 78056 Villingen-Schwenningen (DE)
(72) Erfinder: SCHUMANN, Uwe, 78054 Villingen-Schwenningen (DE); SCHRÖDER, Stefan, 78073 Bad Dürrheim (DE); RAU, Wolfgang, 73770 Denkendorf (DE)
(74) Vertreter: Westphal, Mussgnug & Partner Patentanwälte mbB
(86) Internationale Anmeldenummer: PCT/EP2009/006374
(87) Internationale Veröffentlichungsnummer: WO 2010/028772

(56) Entgegenhaltungen:
- EP-A- 0 212 006
- DD-A- 42 684
- DE-T2- 69 907 365
- US-A- 3 682 560
- US-A- 4 700 441

## Beschreibung

Die Erfindung betrifft eine Vorrichtung zur Erzeugung eines Gewindes in einer Bohrung eines Werkstückes gemäß dem Oberbegriff des Patentanspruchs 1.

Bei der Teilefertigung, insbesondere in Fertigungslinien, werden häufig in den zu bearbeitenden Werkstücken Löcher gebohrt oder gestanzt, die in einem nachfolgenden Bearbeitungsschritt mit einem Gewinde versehen werden. Zur Erzeugung des Gewindes werden Gewindeformer oder Gewindeschneider verwendet. Nachfolgend wird der Einfachheit halber der Begriff "Gewindeformen" einheitlich für beide Verfahren verwendet, sodass die Bezeichnung "Gewindeformen" stets auch das "Gewindeschneiden" einschließen soll.

Zur Erzeugung des Gewindes wird ein Gewindeformkopf verwendet, in welchem ein drehend antreibbarer Gewindeformer gelagert ist. Der Gewindeformer wird an der zuvor gebohrten oder gestanzten Bohrung angesetzt und bewegt sich drehend in diese Bohrung, wobei das Gewinde durch Materialverdrängung geformt bzw. durch Materialabtrag geschnitten wird. Der Drehantrieb kann durch einen eigenen Antriebsmotor, insbesondere einen Elektromotor, erfolgen. Damit ist ein flexibler Einsatz des Gewindeformkopfes möglich. Für eine Automatisierung, insbesondere in einer Fertigungslinie, ist dieser Antrieb jedoch aufwändig und erfordert einen zusätzlichen Steuerungsaufwand.

Es ist daher bekannt, bei der automatischen Teilefertigung, bei welcher Pressen zum Umformen, Stanzen und Schneiden der Werkstücke verwendet werden, die Presse mit ihrem Hubantrieb auch für den Antrieb des Gewindeformkopfes zu verwenden. Dabei wird die lineare Hubbewegung des Stößels der Presse gegenüber dem statischen Unterteil der Presse in eine rotatorische Bewegung für den Antrieb des Gewindeformkopfes, d. h. des Gewindeformers, umgesetzt. Die Umsetzung der linearen Hubbewegung in eine rotatorische Bewegung kann dabei durch eine Spindel und eine Spindelmutter erfolgen (z.B. US 4,692,072; EP 0 761 358 B1). In einer anderen gattungsgemäßen Ausführung (z. B. EP 0 212 006 B1) läuft eine Antriebseinheit mit einem Ritzel auf einer Zahnstange, wobei die Antriebseinheit und die Zahnstange jeweils mit einem der gegeneinander bewegbaren Maschinenteile, nämlich dem Unterteil bzw. dem Stößel, verbunden sind. Beiden Lösungen ist gemeinsam, dass der Drehantrieb von der Antriebseinheit, die die lineare Hubbewegung in die Rotationsbewegung umsetzt, über ein Zahnradgetriebe zu dem Gewindeformkopf übertragen wird, um dort den Gewindeformer drehend anzutreiben. Aufgrund dieser als Zahnradgetriebe ausgebildeten Getriebeverbindung verläuft die Achse des Gewindeformers parallel zur Achse der linearen Hubbewegung der Presse, sodass nur Gewinde erzeugt werden können, deren Achse parallel zur Achse der Hubbewegung verläuft. Weiter hat die Ausbildung der Getriebeverbindung als Zahnradgetriebe zur Folge, dass der Gewindeformkopf und die Antriebseinheit nur einen relativ kleinen Abstand aufweisen können. Bei einem größeren Abstand würden die Einbauabmessungen des Zahnradgetriebes zu groß werden. Außerdem nehmen mit zunehmendem Abstand auch auf den Gewindeformkopf wirkende Kippmomente zu, sodass ungleichmäßige Belastungen bei der Erzeugung des Gewindes auftreten können. Aus diesen Gründen sind bei den bekannten Vorrichtungen die Antriebseinheit und die Zahnstange bzw. die Gewindespindel im Arbeitsraum der Presse und in der Regel im Arbeitsraum des Werkzeuges zwischen Werkzeugoberteil und Werkzeugunterteil angeordnet. Dies bedeutet wiederum, dass der Antrieb den im Arbeitsraum des Werkzeuges für das Werkstück zur Verfügung stehenden Platz einschränkt. Außerdem ist der Antrieb in das Werkzeug integriert, sodass die Vorrichtung zur Erzeugung des Gewindes nicht flexibel bei unterschiedlichen Werkzeugen eingesetzt werden kann.

Als weiterer Stand der Technik werden die Dokumente DE 699 07 365 T2, DD 42 684 A, US 4 700 441 A und US 3 682 560 A genannt.

Der Erfindung liegt die Aufgabe zugrunde, eine Vorrichtung zur Erzeugung eines Gewindes in einer Bohrung eines Werkstückes der eingangs genannten Gattung so auszubilden, dass die Vorrichtung vielseitiger einsetzbar ist.

Diese Aufgabe wird erfindungsgemäß gelöst durch eine Vorrichtung mit den Merkmalen des Patentanspruchs 1.

Vorteilhafte Ausführungen der Erfindung sind in den Unteransprüchen angegeben.

Der wesentliche Gedanke der Erfindung besteht darin, die lineare Hubbewegung zwischen Stößel und Unterteil einer Presse in einer Antriebseinheit in eine Drehbewegung umzusetzen und den Drehantrieb von der Antriebseinheit zu dem Gewindeformkopf über eine Welle zu übertragen, die nur das Drehmoment überträgt, jedoch quer zu ihrer Achse beweglich ist. Vorzugsweise ist diese Welle als Gelenkwelle ausgebildet. Abgesehen von der Übertragung des Drehantriebes stellt die Welle keine mechanisch steife Verbindung zwischen der Antriebseinheit und dem Gewindeformkopf dar. Der Gewindeformkopf kann somit in frei wählbarer Anordnung in dem Arbeitsraum montiert werden. Die Achsrichtung des Gewindeformers kann somit unabhängig von der Achsrichtung der Hubbewegung der Presse gewählt werden. Die zu erzeugende Gewindebohrung kann daher nicht nur achsparallel zu der Hubachse verlaufen, sondern kann auch unter einem Winkel zu dieser Achse verlaufen. Es können Bohrungen mit einem Gewinde versehen werden, die parallel zur Hubachse der Presse verlaufen, die senkrecht zur Hubachse verlaufen oder die einen beliebigen anderen Winkel mit der Hubachse einschließen. Die Vorrichtung ist somit äußerst flexibel auch an komplizierter geformte Werkstücke anpassbar. Der Gewindeformkopf ist auch schwenkbar montierbar, sodass die Achse des herzustellenden Gewindes verstellt werden kann.

Auch der Drehantrieb des Gewindeformers kann unabhängig von dem Hubweg von Stößel und Unterteil der Presse gewählt werden. Es muss lediglich eine entsprechende Getriebeübersetzung bzw. -untersetzung in der Antriebseinheit gewählt werden. Auf diese Weise ist es möglich, das Drehmoment des Gewindeformers den individuellen Anforderungen anzupassen und den Antrieb entsprechend über die numerische Steuerung des Pressenhubes zu bestimmen.

Da der Drehantrieb von der Antriebseinheit zu dem Gewindeformkopf über die bewegliche Welle übertragen wird, ist die Vorrichtung auch keinen Einschränkungen bezüglich des Abstandes zwischen der Antriebseinheit und dem Gewindeformkopf unterworfen. Da der Gewindeformkopf in dem Arbeitsraum mechanisch getrennt von der Antriebseinheit montiert ist, wirken auf den Gewindeformkopf keine Kippmomente ein, selbst wenn der Abstand zwischen dem Gewindeformkopf und der Antriebseinheit groß ist.

Daher ist die Antriebseinheit außerhalb der Arbeitsstation und außerhalb des Arbeitsraumes an der Presse montiert, wobei lediglich die Welle von der Antriebseinheit in den Arbeitsraum hineingeführt werden muss. Die Antriebseinheit beansprucht daher keinen Platz im Arbeitsraum, sodass der Arbeitsraum in vorteilhafter Weise für die Aufnahme und das Handling der Werkstücke genutzt werden kann. Die Vorrichtung kann dadurch außerdem auch vielseitig eingesetzt werden, da eine einheitliche Vorrichtung mit ihrem Antrieb an der Presse montiert werden kann, während nur der Gewindeformkopf in das Werkzeug geführt und dort montiert werden kann. Eine vielseitige Anpassung einer einheitlichen Vorrichtung an unterschiedliche Werkzeuge ist auf diese Weise möglich.

Schließlich ist es auch möglich, in einer Fertigungslinie mehrere Gewindeformköpfe anzuordnen, die über jeweilige Wellen von demselben Antrieb angetrieben werden. Diese Gewindeformköpfe können verschiedene Bohrungen eines Werkstückes oder Bohrungen aufeinanderfolgender Werkstücke mit Gewinde versehen. Dabei können die Gewindeformköpfe quer zur Transportrichtung der Werkstücke in der Fertigungslinie nebeneinander oder in der Transportrichtung hintereinander angeordnet sein.

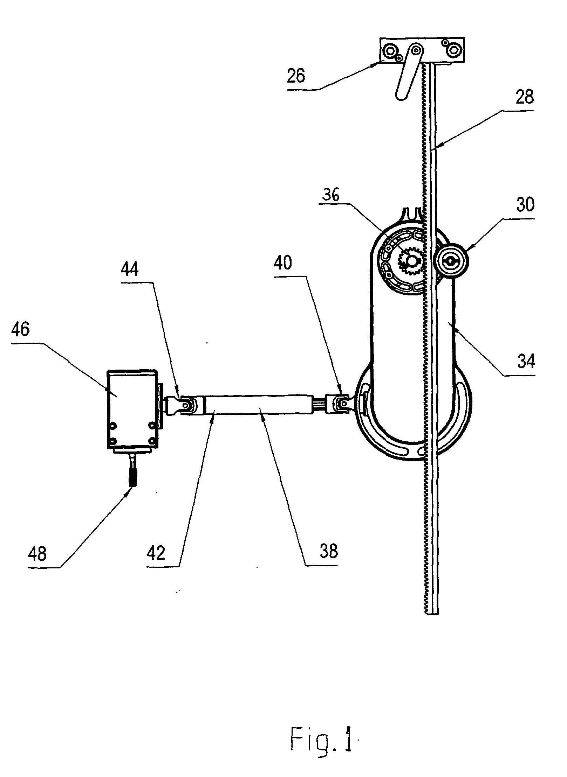

Im Folgenden wird die Erfindung anhand eines in der Zeichnung dargestellten Ausführungsbeispieles näher erläutert. Es zeigen
- Figur 1: eine erfindungsgemäße Vorrichtung zur Erzeugung eines Gewindes,
- Figur 2: eine nicht-erfindungsgemäße, in eine Presse eingebaute Vorrichtung,
- Figuren 3a + b: schematisch die Erzeugung einer Gewindebohrung mit schräger Achse,
- Figuren 4a + b: schematisch die nicht-erfindungsgemäße Erzeugung einer Gewindebohrung mit zur Hubrichtung senkrechter Achse,
- Figuren 5a + b: schematisch die Anordnung mit abschwenkbarem Gewindeformkopf,
- Figuren 6a + b: schematisch eine abgewandelte Ausführung mit abschwenkbarem Gewindeformkopf und
- Figur 7: schematisch eine Draufsicht auf eine Anordnung mit mehreren Gewindeformköpfen.

Die erfindungsgemäße Vorrichtung dient zur Erzeugung eines Gewindes in einer Bohrung eines Werkstückes, wobei diese Bohrung in einem vorangehenden Arbeitsschritt in das Werkstück gestanzt oder gebohrt wird. Die Vorrichtung wird an einer Presse eingesetzt, wie sie zum Umformen, Stanzen oder Schneiden von Werkstücken, insbesondere von Blechteilen, verwendet wird. Mit "Presse" wird dabei jede Maschine bezeichnet, die ein statisches Maschinenteil und ein gegen dieses bewegbares Hubteil aufweist. Nachfolgend wird das statische Maschinenteil als Unterteil und das bewegbare Hubteil als Stößel bezeichnet.

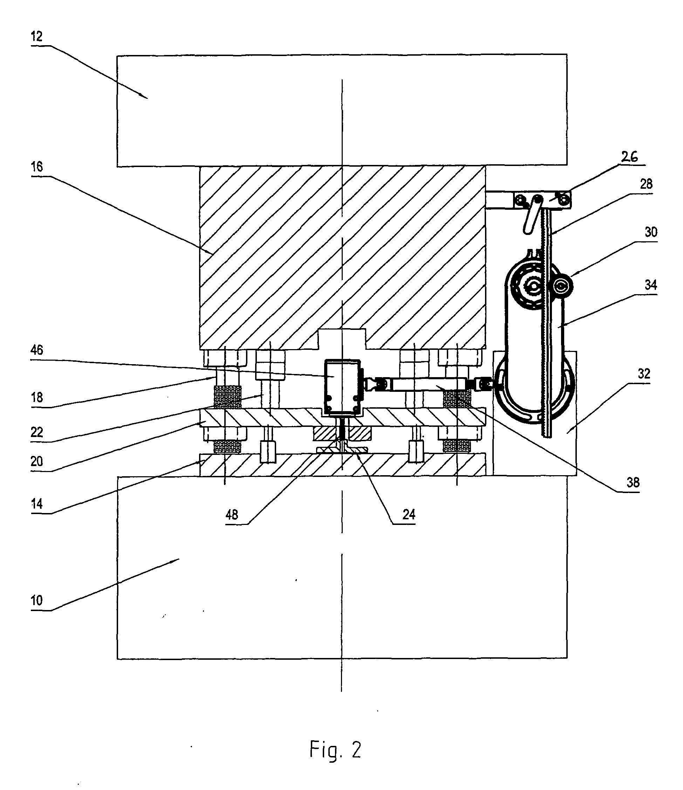

In Figur 2 ist schematisch eine solche Presse dargestellt. Die Presse weist ein Unterteil 10 auf, welches z. B. Bestandteil des Pressenrahmens ist. In dem Pressenrahmen ist gegenüber dem Unterteil 10 angetrieben linear bewegbar ein Stößel 12 geführt. In den meisten Fällen ist die lineare Hubbewegung des Stößels 12 eine vertikale Hubbewegung. In dem Arbeitsraum der Presse zwischen dem Unterteil 10 und dem Stößel 12 ist eine Arbeitsstation angeordnet, die im Allgemeinen durch ein in den Arbeitsraum eingesetztes Werkzeug gebildet wird. Das Werkzeug besteht bspw. aus einem an dem Unterteil 10 angeordneten Werkzeugunterteil 14 und einem an dem Stößel 12 angeordneten Werkzeugoberteil 16. Das Werkzeugoberteil 16 ist gegenüber dem Werkzeugunterteil 14 mittels Führungen 18 in der Hubrichtung des Stößels 12 geführt bewegbar. Zwischen dem Werkzeugunterteil 14 und dem Werkzeugoberteil 16 und planparallel zu diesen ist eine Federplatte 20 angeordnet, die ebenfalls auf den Führungen 18 geführt wird und gegen die Kraft von Federn 22 bewegbar ist. Werkzeuge dieser Art sind Stand der Technik, sodass diese hier nicht im Einzelnen beschrieben werden. Werkzeuge dieser Art dienen zur Aufnahme eines vorzugsweise automatisch zugeführten Werkstückes 24, welches durch die Federplatte 20 positioniert fixiert wird und mittels des Stößelhubes bearbeitet wird.

Erfindungsgemäß ist an dem Stößel 12 mittels Befestigungselementen 26 eine Zahnstange 28 befestigt. Die Zahnstange 28 verläuft achsparallel zur vertikalen Hubrichtung des Stößels 12 und ragt von diesem Stößel 12 nach unten. In dem unteren Bereich ist die Zahnstange 28 in einer Zahnstangenführung 30 vertikal verschiebbar geführt. Die Zahnstangenführung 30 ist an dem statischen Pressenrahmen montiert. Mittels weiterer Befestigungselemente 32 ist an dem Unterteil 10 eine Antriebseinheit 34 befestigt. Die Antriebseinheit 34 steht mit einem in der Antriebseinheit 34 gelagerten Ritzel 36 mit der Zahnstange 28 in Zahneingriff. Bei einer vertikalen Hubbewegung des Stößels 12 wird die Zahnstange 28 vertikal in der Antriebseinheit 34 verschoben, wodurch das Ritzel 36 der Antriebseinheit 34 um seine horizontale Achse gedreht wird.

Die Drehung des Ritzels 36 wird in einem in die Antriebseinheit 34 integrierten Übersetzungsgetriebe übersetzt bzw. untersetzt. An den Ausgang des Übersetzungsgetriebes ist eine Gelenkwelle 38 angeschlossen. Die Gelenkwelle 38 ist mittels eines ersten kardanischen Gelenks 40 mit dem Ausgang des Übersetzungsgetriebes 36 verbunden. An das erste kardanische Gelenk 40 schließt sich eine teleskopische Welle 42 an, die z. B. mittels einer Keilführung teleskopisch längenveränderlich, aber drehmomentsteif ist. Am anderen Ende ist die teleskopische Welle 42 über ein zweites kardanisches Gelenk 44 mit einem Gewindeformkopf 46 verbunden. Auf diese Weise ist der Gewindeformkopf 46 über die Gelenkwelle 38 frei bewegbar mit der Antriebseinheit 34 verbunden, wobei jedoch der Drehantrieb der Antriebseinheit 34 über die Gelenkwelle 38 auf den Gewindeformkopf 46 übertragen wird.

Der Gewindeformkopf 46 ist in an sich bekannter Weise ausgebildet, sodass eine detaillierte Beschreibung überflüssig ist und auf den einschlägigen Stand der Technik verwiesen wird. Insbesondere wird durch den von der Gelenkwelle 38 über das zweite kardanische Gelenk 44 in den Gewindeformkopf eingeleiteten Drehantrieb ein Kegelrad angetrieben, welches seinerseits eine in dem Gewindeformkopf 46 drehbar, aber axial unverschiebbare Leitpatrone antreibt. In der Leitpatrone ist axial verschiebbar und unverdrehbar ein Gewindeformer 48 bzw. ein Gewindeschneider gelagert. An das innere Ende des Gewindeformers 48 schließt sich eine Leitspindel an, die in einer Leitmutter läuft. Die Leitmutter wird ebenfalls über den Drehantrieb in Drehung versetzt, wodurch die Leitspindel vorwärts bewegt wird und entsprechend den Gewindeformer 48 axial aus der Gewindepatrone und damit aus dem Gewindeformkopf 46 vorschiebt. Die Steigung der Leitspindel entspricht dabei der Steigung des Gewindeformers 48.

Nachfolgend werden verschiedene Einsatzfälle der erfindungsgemäßen Vorrichtung schematisch erläutert.

In der Darstellung der Figur 2 ist der Gewindeformkopf 46 auf der Federplatte 20 mit vertikaler Achse des Gewindeformers 48 angeordnet. Der Gewindeformer 48 ist dabei nach unten gerichtet. In dieser nicht-erfindungsgemäßen Anordnung des Gewindeformkopfes 46 kann ein Gewinde von oben in das Werkstück 24 eingebracht werden, wobei die Achse der Gewindebohrung parallel zu der Hubrichtung des Stößels 12 verläuft. Das Werkstück 24 wird auf das Werkzeugunterteil 14 transportiert. Der Stößel 12 wird abgesenkt, wodurch die Federplatte 20 auf das Werkstück abgesenkt wird, sodass dieses durch Positionierungsmittel positioniert und fixiert wird. Dabei kommt der beim Absenken des Stößels 12 drehend angetriebene Gewindeformer 48 an die Bohrung des Werkstückes 24. Beim weiteren Absenken des Stößels 12 bewegt sich die Federplatte 20 gegen die Kraft der Federn 22, sodass die Federplatte 20 mit dem auf dieser montierten Gewindeformkopf 46 ihre Position bezüglich des Werkstückes 24 beibehält. Das weitere Absenken des Stößels 12 bewegt dabei jedoch die Zahnstange 28 weiter nach unten, sodass der Gewindeformer 48 in den Gewindeformkopf 46 rotierend angetrieben wird und sich aus dem Gewindeformkopf 46 in die Bohrung des Werkstückes 24 hineindreht und das Gewinde formt. Die teleskopische Welle 42 nimmt dabei Abstandsänderungen zwischen der Antriebseinheit 34 und dem Gewindeformkopf 46 auf.

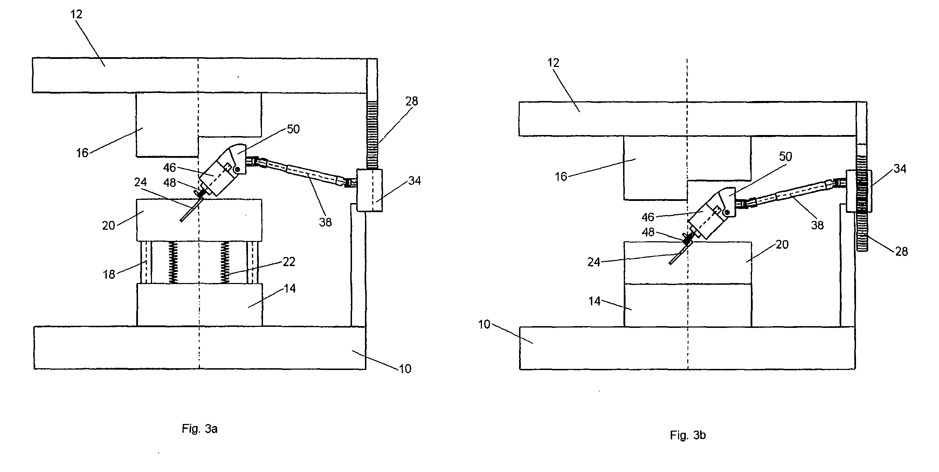

In den Figuren 3 bis 7 sind nur die Teile schematisch gezeigt, die für die Funktion der Vorrichtung wesentlich sind.

In Figur 3 ist der Gewindeformkopf 46 mittels eines Schwenkgelenkes 50 um eine horizontale Achse schwenkbar und feststellbar an der Federplatte 20 befestigt. Dadurch kann die Achse des Gewindeformers 48 unter einem beliebigen Winkel zur Federplatte 20 eingestellt werden. Unter diesem einstellbaren Winkel kann ein Gewinde in eine Bohrung des auf der Federplatte 20 fixierten Werkstückes 24 eingebracht werden. Die Bohrung des Werkstückes 24 kann dabei einen beliebigen einstellbaren Neigungswinkel gegenüber der Ebene der Federplatte 20 und damit bezüglich der vertikalen Hubachse des Stößels 12 aufweisen. Ebenso kann wegen der Beweglichkeit der Gelenkwelle 38 der Gewindeformkopf 46 mit einem beliebigen Azimutwinkel der Achse des Gewindeformers 48 um die zur Hubachse parallele vertikale Achse eingestellt werden.

In der Stellung der Figur 3a ist das Werkstück 24 auf der Federplatte 20 positioniert und der Gewindeformer 48 ist am Eintritt der Bohrung des Werkstückes 24 positioniert. Bei der weiteren Abwärtsbewegung des Stößels 12 in die Stellung der Figur 3b wandert die Zahnstange 28 nach unten und treibt über die Gelenkwelle 38 den Gewindeformer 48 an, der das Gewinde in die Bohrung des Werkstückes 24 einbringt.

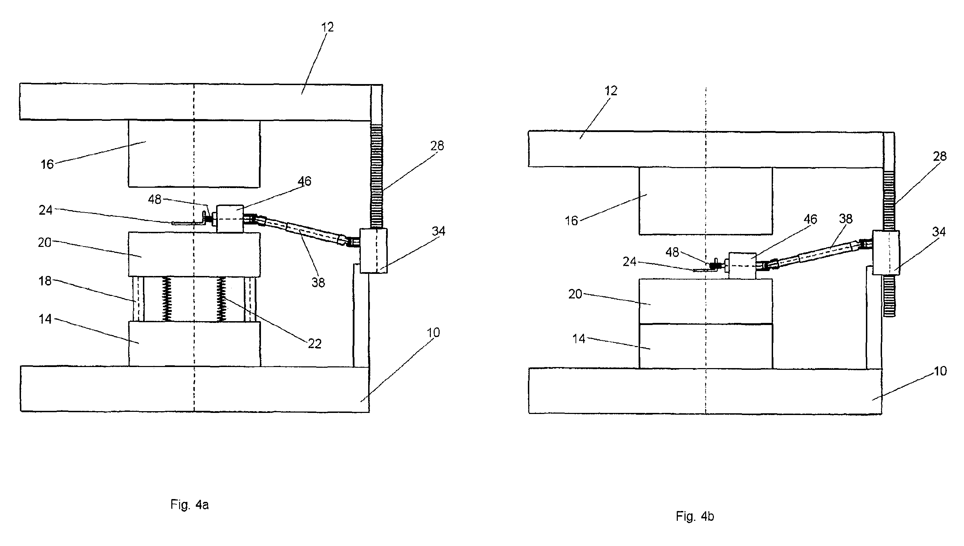

Figur 4 zeigt eine nicht-erfindungsgemäße Anwendung, bei welcher ein Gewinde in eine Bohrung des Werkstückes 24 eingebracht wird, die horizontal, d. h. senkrecht zur Hubachse des Stößels 12, verläuft. Auch hier wird in der Stellung der Figur 4a das Werkstück 24 auf der Federplatte 20 positioniert und fixiert und der Gewindeformkopf 46 kommt mit seinem Gewindeformer 48 an den Eintritt der Bohrung. Beim weiteren Absenken des Stößels 12 in die Stellung der Figur 4b wird die Antriebseinheit 34 durch die Zahnstange 28 angetrieben und der Gewindeformer 48 bewegt sich angetrieben aus dem Gewindeformkopf 46 in die Bohrung des Werkstückes 24, um das Gewinde zu formen.

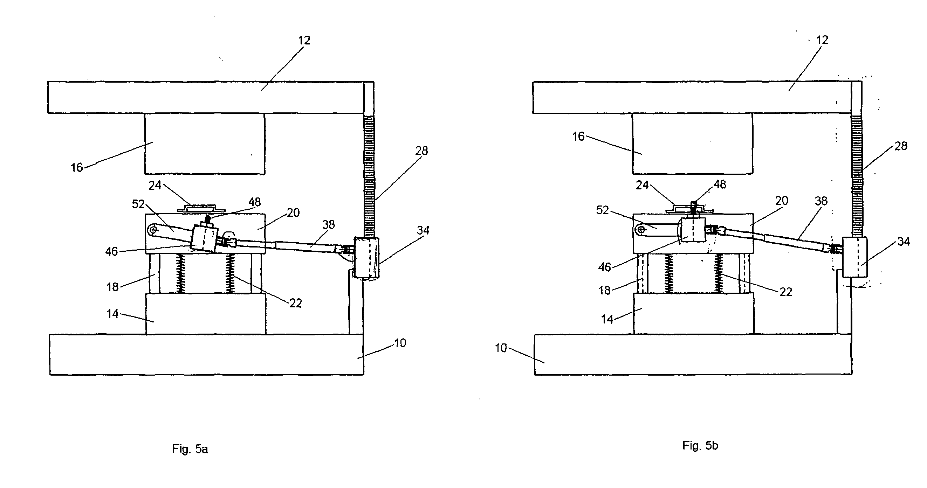

In dem Beispiel der Figur 5 ist der Gewindeformkopf 46 unter dem auf der Federplatte 20 positionierten und fixierten Werkstück 24 angeordnet. Bspw. ist der Gewindeformkopf 46 in einer entsprechenden Aussparung der Federplatte 20 gelagert. In diesem Ausführungsbeispiel ist der Gewindeformkopf 46 mittels eines Schwenkhebels 52 an der Federplatte 20 gelagert, sodass der Gewindeformkopf 46 mit dem Gewindeformer 48 nach unten unter die Ebene der Federplatte 20 weggeschwenkt werden kann, wie dies in Figur 5a gezeigt ist. In dieser Stellung ist die gesamte Oberfläche der Federplatte 20 frei, sodass die Zuführung und die Abführung des Werkstückes 24 äußert einfach durchgeführt werden können. Nach dem Positionieren und Fixieren des Werkstückes 24 auf der Federplatte 20 wird der Gewindeformkopf 46 hochgeschwenkt, wie dies Figur 5b zeigt. Der Gewindeformer 48 gelangt dadurch an die Bohrung des Werkstückes 24, die in diesem Falle parallel zur Hubachse vertikal verläuft. Beim weiteren Absenken des Stößels 12 arbeitet sich der Gewindeformer 48 von unten in die Bohrung des Werkstückes 24, um das Gewinde zu formen.

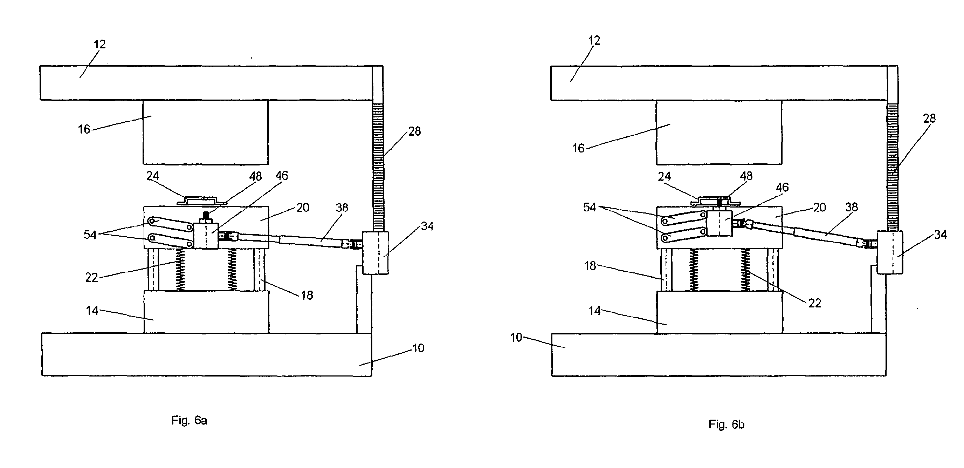

Figur 6 zeigt eine Abwandlung der Ausführung der Figur 5. In dieser Ausführung ist der Gewindeformkopf 46 mittels Parallelhebeln nach unten unter die Ebene der Federplatte 20 schwenkbar. Der Gewindeformkopf 46 bewegt sich aufgrund dieser Parallelogrammführung mit vertikaler Achse des Gewindeformers 48 auf und ab. Die Vorteile für den Werkstücktransport sind dabei dieselben wie bei der Ausführung der Figur 5. Da sich der Gewindeformkopf 46 jedoch mit vertikaler Achse auf und ab bewegt, benötigt der Gewindeformkopf 46 einen kleineren Bauraum für seine Bewegung und es können auch größere Wege überbrückt werden.

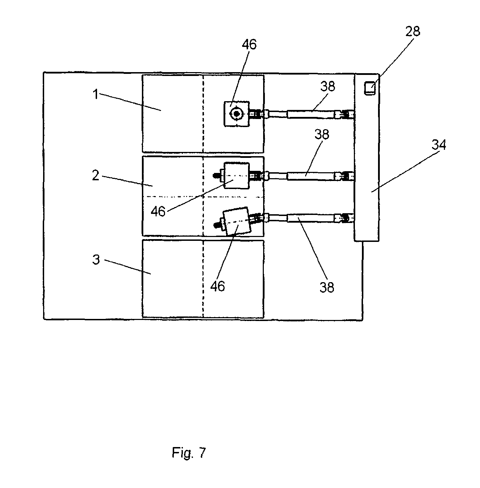

Figur 7 zeigt in einer Aufsicht mehrere aufeinanderfolgende Arbeitsstationen innerhalb des Arbeitsraumes einer Presse. Eine mit dem Stößel 12 verbundene Zahnstange 28 treibt ein Ritzel der Antriebseinheit 34 an, welche wiederum über Zahngetriebe mehrerer Gelenkwellen 38 und über diese mehrere Gewindeformköpfe 46 antreibt. Im dargestellten Ausführungsbeispiel ist in einer Arbeitsstation I ein Gewindeformkopf 46 angeordnet, während in der folgenden Arbeitsstation II zwei Gewindeformköpfe 46 angeordnet sind. Die Gewindeformköpfe 46 der aufeinanderfolgenden Stationen können unterschiedliche Anstellwinkel des Gewindeformers 48 aufweisen. Es ist ohne Weiteres ersichtlich, dass in den aufeinanderfolgenden Arbeitsstationen I, II usw. verschiedene Bohrungen mit einem Gewinde versehen werden können, ebenso können in einer Arbeitsstation (z.B. in der Arbeitsstation II) verschiedene Bohrungen desselben Werkstückes parallel mit Gewinde versehen werden.

### Bezugszeichenliste

- 10: Unterteil
- 12: Stößel
- 14: Werkzeugunterteil
- 16: Werkzeugoberteil
- 18: Führungen
- 20: Federplatte
- 22: Federn
- 24: Werkstück
- 26: Befestigungselemente
- 28: Zahnstange
- 30: Zahnstangenführung
- 32: Befestigungselemente
- 34: Antriebseinheit
- 36: Ritzel
- 38: Gelenkwelle
- 40: erstes kardanisches Gelenk
- 42: teleskopische Welle
- 44: zweites kardanisches Gelenk
- 46: Gewindeformkopf
- 48: Gewindeformer
- 50: Schwenkgelenk
- 52: Schwenkhebel
- 54: Parallelhebel

## Patentansprüche

1. Vorrichtung zur Erzeugung eines Gewindes in einer Bohrung eines Werkstückes mittels einer Presse oder dergleichen, die ein statisches Unterteil (10) und einen gegen dieses linear bewegbaren Stößel (12) aufweist, mit einem in einem Arbeitsraum der Presse angeordneten Gewindeformkopf (46), mit einem in dem Gewindeformkopf (46) gelagerten drehend antreibbaren Gewindeformer (48), mit einer Zahnstange (28), mit einer Antriebseinheit (34), die mit einem Ritzel (36) in die Zahnstange (28) eingreift, wobei die Zahnstange (28) und die Antriebseinheit (34) durch die Hubbewegung des Stößels (12) gegeneinander bewegt werden, und mit einer Getriebeverbindung, die die Drehbewegung der Antriebseinheit (34) für den Drehantrieb des Gewindeformers (48) zu dem Gewindeformkopf (46) überträgt,
**dadurch gekennzeichnet, dass** die Getriebeverbindung durch eine Welle (38) gebildet ist, die ein Drehmoment überträgt und zumindest quer zu ihrer Achse beweglich ist, dass die Antriebseinheit (34) außerhalb des Arbeitsraums fest an dem Unterteil (10) montiert und die Zahnstange (28) mit dem Stößel (12) fest verbunden ist, dass zwischen das Unterteil (10) und den Stößel (12) ein Werkzeug (14, 16, 20) zur Aufnahme des Werkstückes (24) einsetzbar ist, und dass der Gewindeformkopf (46) an dem Werkzeug (14, 26, 20) mit einem in Bezug auf die Achsrichtung der Hubbewegung zwischen 0° und 90° einstellbaren Anstellwinkel schwenkbar montierbar ist.

2. Vorrichtung nach Anspruch 1,
**dadurch gekennzeichnet, dass** die Welle eine Gelenkwelle (38) mit kardanischen Gelenken (40, 44) ist.

3. Vorrichtung nach Anspruch 2,
**dadurch gekennzeichnet, dass** die Gelenkwelle (38) teleskopisch längenveränderlich ist.

4. Vorrichtung nach einem der vorhergehenden Ansprüche,
**dadurch gekennzeichnet, dass** das Werkzeug eine Federplatte (20) zur Aufnahme und Fixierung des Werkstückes (24) aufweist und dass der Gewindeformkopf (46) an der Federplatte (20) montierbar ist.

5. Vorrichtung nach Anspruch 4,
**dadurch gekennzeichnet, dass** der Gewindeformkopf (46) mittels einer Schwenkeinrichtung (52, 54) abschwenkbar an der Federplatte (20) angebracht ist.

6. Vorrichtung nach einem der vorhergehenden Ansprüche,
**dadurch gekennzeichnet, dass** mehrere Gewindeformköpfe (46) zwischen dem Unterteil (10) und dem Stößel (12) angeordnet sind, die Bohrungen verschiedener Werkstücke (24) oder verschiedene Bohrungen eines Werkstückes (24) bearbeiten.

7. Vorrichtung nach Anspruch 6,
**dadurch gekennzeichnet, dass** die Gewindeformköpfe (46) durch eine gemeinsame Zahnstange (28) und eine gemeinsame Antriebseinheit (34) über jeweils zugeordnete Wellen (38) angetrieben werden.

8. Vorrichtung nach einem der vorhergehenden Ansprüche,
**dadurch gekennzeichnet, dass** der Gewindeformer (48) mittels einer Leitpatrone und einer Leitspindel drehantreibbar und axial beweglich in dem Gewindeformkopf (46) gelagert ist.

## Claims

1. Device for producing a thread in a bore of a workpiece by means of a press or the like, which comprises a static lower part (10) and a ram (12) which can be moved linearly relative to the latter, having a thread forming head (46) arranged in a working space of the press, having a thread former (48) which is mounted in the thread forming head (46) and which can be driven in rotation, having a toothed rack (28), having a drive unit (34) which engages in the toothed rack (28) with a pinion (36), wherein the toothed rack (28) and the drive unit (34) are moved relative to one another by the stroke movement of the ram (12), and having a transmission connection which transmits the rotational movement of the drive unit (34) to the thread forming head (46) for the rotational drive of the thread former (48), **characterized in that** the transmission connection is formed by a shaft (38) which transmits a torque and which is movable at least transversely to its axis, **in that** the drive unit (34) is fixedly mounted on the lower part (10) outside of the working space and the toothed rack (28) is fixedly connected to the ram (12), **in that** a tool (14, 16, 20) for holding the workpiece (24) can be inserted between the lower part (10) and the ram (12), and **in that** the thread forming head (46) can be mounted on the tool (14, 26, 20) in such a way as to be able to pivot with a working angle that is adjustable between 0° and 90° relative to the axis direction of the stroke movement.

2. Device according to claim 1, **characterized in that** the shaft is an articulated shaft (38) with universal joints (40, 44).

3. Device according to claim 2, **characterized in that** the articulated shaft (38) is telescopically length-adjustable.

4. Device according to any of the preceding claims, **characterized in that** the tool has a spring plate (20) for holding and fixing the workpiece (24), and **in that** the thread forming head (46) can be mounted on the spring plate (20).

5. Device according to claim 4, **characterized in that** the thread forming head (46) is attached to the spring plate (20) in such a way as to be able to be pivoted away by means of a pivoting device (52, 54).

6. Device according to any of the preceding claims, **characterized in that** a plurality of thread forming heads (46) are arranged between the lower part (10) and the ram (12), which thread forming heads machine the bores of different workpieces (24) or different bores of one workpiece (24).

7. Device according to claim 6, **characterized in that** the thread forming heads (46) are driven by a common toothed rack (28) and a common drive unit (34) via respectively assigned shafts (38).

8. Device according to any of the preceding claims, **characterized in that** the thread former (48) is mounted in the thread forming head (46) in such a way as to be axially movable and able to be driven in rotation by means of a guide cartridge and a guide spindle.

## Revendications

1. Dispositif pour réaliser un filetage dans un perçage d'une pièce à l'aide d'une presse ou équipement analogue, ayant une partie inférieure (10) fixe et un coulisseau (12) mobile par rapport à celle-ci suivant un mouvement linéaire, ayant
- une tête de formage de filet (46) dans l'espace de travail de la presse,
- un formeur de filet (48) entraîné en rotation, monté dans la tête de formage de filet (46),
- une crémaillère (28),
- une unité d'entraînement (34) en prise par un pignon (36) avec la crémaillère (28),
la crémaillère (28) et l'unité d'entraînement (34) étant déplacées l'une par rapport à l'autre par la course du coulisseau (12), et
une transmission transmettant le mouvement de rotation de l'unité d'entraînement (34) pour entraîner en rotation le formeur de filet (48) vers la tête de formage de filet (46),
dispositif **caractérisé en ce que**
- la transmission est constituée par un arbre (38) qui transmet un couple et est mobile au moins transversalement à son axe,
- l'unité d'entraînement (34) est installée de manière fixe sur la partie inférieure (10) en dehors de l'espace de travail et la crémaillère (28) est solidaire du coulisseau (12),
- un outil (14, 16, 20) pour recevoir la pièce (24) se place entre la partie inférieure (10) et le coulisseau (12), et
- la tête de formage de filet (46) est montée de manière pivotante sur l'outil (14, 26, 20) avec un angle réglable entre 0° et 90° par rapport à la direction axiale du mouvement de translation.

2. Dispositif selon la revendication 1,
**caractérisé en ce que**
l'arbre est un arbre articulé (38) muni d'articulations à la cardan, (40, 44).

3. Dispositif selon la revendication 2,
**caractérisé en ce que**
l'arbre articulé (38) est télescopique, de longueur variable.

4. Dispositif selon l'une des revendications précédentes,
**caractérisé en ce que**
l'outil comporte une plaque à ressorts (20) pour recevoir et fixer la pièce (24) et la tête de formage de filet (46) est installée sur la plaque à ressorts (20).

5. Dispositif selon la revendication 4,
**caractérisé en ce que**
la tête de formage de filet (46) est installée sur la plaque à ressorts (20) de manière à pouvoir être basculée vers le bas à l'aide d'une installation de basculement (52, 54).

6. Dispositif selon l'une des revendications précédentes,
**caractérisé en ce que**
plusieurs têtes de formage de filet (46) sont installées entre la partie inférieure (10) et le coulisseau (12) pour usiner les perçages de différentes pièces (24) ou différents perçages dans une même pièce (24).

7. Dispositif selon la revendication 6,
**caractérisé en ce que**
les têtes de formage de filet (46) sont entraînées par une crémaillère commune (28) et une unité d'entraînement commune (34) par des arbres associés (38).

8. Dispositif selon l'une des revendications précédentes,
**caractérisé en ce que**
le formeur de filet (48) est monté de manière à être entraîné en rotation par l'intermédiaire d'un manchon de guidage et d'une broche de guidage et il est mobile axialement dans la tête de formage de filet (46).
